# EUROPEAN PATENT APPLICATION

(11) **EP 4 624 787 A1**
(43) Date of publication of application: **01.10.2025**
(21) Application number: 23905965.2
(22) Date of filing: 19.12.2023
(51) Int. Cl.: F16K 31/06, F16K 51/00

(54) **FASTENER AND VALVE APPARATUS HAVING SAME**

(30) Priority: 20.12.2022 CN 202223427325 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); ZHANG, Wenrong, Shaoxing, Zhejiang 311835 (CN)
(74) Representative: Inchingalo, Simona
(86) International application number: PCT/CN2023/139983
(87) International publication number: WO 2024/131802

(57) **Abstract**

A snap-fit and a valve device with the snap-fit. The snap-fit includes: a connecting portion; and a fixing portion provided on the connecting portion; the fixing portion includes a snap assembly and a limiting member; the limiting member is provided with a connecting end and a free end which are arranged opposite each other; the connecting end of the limiting member is connected to the snap assembly; the free end of the limiting member is located outside the snap assembly and directly faces a side of the snap assembly facing the connecting portion. The problem that a coil portion is not easily connected to a valve seat can be solved.

## Description

The present invention claims priority to a patent application with application no. 202223427325.7, entitled "Snap-Fit and Valve Device with Snap-Fit", and filed to the China National Intellectual Property Administration on December 20, 2022.

### Technical Field

The present invention relates to the technical field of valve devices, and in particular, to a snap-fit and a valve device with the snap-fit.

### Background

At present, a valve device mainly includes a valve seat, a valve main body and a coil portion, and the coil portion can generate a magnetic field and drive, by means of the magnetic field, a valve head in the valve main body to move, so as to achieve operations such as opening and closing a valve port. However, in the prior art, when installing the coil portion, screws or other fasteners are required to connect the coil portion to the valve seat. This involves aligning screw holes and tightening screws, resulting in low assembly efficiency of the valve device.

### Summary

The present invention provides a snap-fit and a valve device with the snap-fit, so as to solve the problem in the prior art that a coil portion is not easily connected to a valve seat.

According to an aspect of the present invention, some embodiments provide a snap-fit, including: a connecting portion; a fixing portion, provided on the connecting portion; the fixing portion is provided with a snap assembly and a limiting member; the limiting member is provided with a connecting end and a free end which are arranged opposite each other; the connecting end of the limiting member is connected to the snap assembly; the free end of the limiting member is located outside the snap assembly and directly faces a side of the snap assembly facing the connecting portion.

By applying the technical solution of the present invention, the coil portion is placed on the connecting portion, and the snap assembly is snap-fitted with the valve seat. During installation of the snap-fit, the limiting member can first be positioned accurately, after which the snap assembly is fixed to the valve seat, which reduces installation difficulty of the snap-fit and facilitates installation of the snap-fit. Furthermore, this can prevent the coil portion from falling upwards, and the limiting member can prevent the coil portion from rotating around an axial direction of the valve seat when working. By means of the described structure, when installing the coil portion, cumbersome and complex steps of aligning screw holes and tightening screws are avoided, thereby improving an installation efficiency of the coil portion and the valve seat.

Further, the snap assembly includes a connecting plate connected to the connecting portion; the connecting plate is provided with a hook; a bending part of the hook is located on a side of the connecting plate facing the connecting portion. With such an arrangement, it is convenient to connect the hook to the valve seat, while ensuring a fastening of connection between the snap assembly and the valve seat.

Further, the connecting plate is provided with a hole, and a free end of the limiting member is offset from the position of the hole. With such an arrangement, a volume of the snap-fit can be reduced, and interference between the snap assembly and other elements can be avoided.

Further, the free end of the limiting member is located between the connecting portion and the hook. With this arrangement, during the installation of the snap-fit, the limiting member can be precisely positioned first, and then the hook is fixed onto the valve seat, which allows the fixing portion to restrict both an axial movement and a circumferential movement of the coil portion while enhancing an integration of the fixing portion, making it easier to operate.

Further, the fixing portion further includes an actuating member, the actuating member is provided on the connecting plate, and the actuating member is located on a side of the connecting plate away from the connecting portion. With such an arrangement, when connecting the fixing portion and the valve seat, an angle between the fixing portion and the connecting portion is changed by operating the actuating member, and after the fixing portion and the connecting portion are aligned, the actuating member is released, which is convenient to operate and simple in structure.

Further, the snap-fit also includes a support portion; the support portion and the fixing portion are arranged at intervals in a circumferential direction of the connecting portion; the support portion includes a support plate obliquely arranged relative to the connection portion. With such an arrangement, an angle is formed between the support plate and the connecting portion, so that the support plate can be better elastically deformed, and thus the support portion can serve an effective limiting function.

Further, the support portion further includes an arc-shaped plate, the arc-shaped plate is connected to the connecting portion, and the support plate is connected to the arc-shaped plate. With such an arrangement, the arc-shaped plate can achieve an effect of cushioning when the support plate abuts against the limiting surface, thereby preventing the coil portion from being damaged due to excessive impact force when the support portion abuts against the limiting surface.

According to another aspect of the present invention, a valve device is provided, the valve device includes a valve main body, a coil portion and a described snap-fit; the valve main body includes a valve sleeve, and the coil portion is sleeved outside the valve sleeve; the connecting portion of the snap-fit is connected to the coil portion. With such an arrangement, the snap-fit can be connected to the coil portion, facilitating subsequent assembly.

Further, the valve device further includes a valve seat, wherein an outer surface of the valve seat is provided with a protruding portion and a recessed portion, the snap assembly is snap-fitted with the protruding portion, and a free end of the limiting member is inserted into the recessed portion. With such an arrangement, a structure is simple, and a stability when the limiting member and the snap assembly are respectively connected to the limiting slot and the clamping slot can be ensured.

Further, the snap assembly includes a hook; an outer surface of the valve seat is provided with a clamping slot and a limiting slot; a portion of the valve seat between the clamping slot and an end face of the valve seat forms the protruding portion; and the hook is snap-fitted with the protruding portion; the limiting slot is provided on the protruding portion; the recessed portion is the limiting slot; an end of the limiting slot away from the clamping slot penetrates through an end face of the valve seat; and a part between an end of the limiting slot close to the clamping slot and the clamping slot is the protruding portion; the free end of the limiting member is located in the limiting slot. With such an arrangement, when connecting the fixing portion and the valve seat, it only needs to be assembled once, thereby further reducing a fixing step of the coil portion, and facilitating a fixing of the coil portion.

Further, the limiting member includes a first limiting surface and a second limiting face arranged opposite to each other, and a third limiting surface located between the first limiting surface and the second limiting surface; the limiting slot includes a first side surface and a second side surface arranged opposite to each other, and a bottom surface located between the first side surface and the second side surface; the first limiting surface is adhered to the first side surface; the second limiting surface is adhered to the second side surface; and a gap is provided between the third limiting surface and the bottom surface. With such an arrangement, the structure is simple, it is convenient to process the valve seat, and a stability when the limiting member and the snap assembly are respectively connected to the limiting slot and the clamping slot can be ensured.

Further, the snap-fit further includes a support plate connected to the connecting portion and obliquely arranged relative to the connecting portion; the valve body further includes a valve cover connected to the valve sleeve; an end face of the valve seat is provided with an opening; at least part of the valve cover is located in the opening and is connected to the valve seat; the valve cover is provided with a limiting surface, and the support plate in the snap-fit is obliquely arranged relative to the limiting surface and abuts against the limiting surface. With such an arrangement, when the support portion abuts against the valve cover, it is convenient to design a size of the support portion, and a support effect of the support portion and the coil portion can be ensured.

### Brief Description of the Drawings

The drawings of the description, constituting a part of the present invention, are used for providing further understanding of the present invention, and the illustrative embodiments of the present invention and illustrations thereof are used to explain the present invention, rather than constitute inappropriate limitation on the present invention. In the drawings:
Fig. 1 is a schematic structural diagram of a snap-fit according to an embodiment of the present invention;
Fig. 2 is a schematic structural diagram of a valve seat according to an embodiment of the present invention;
Fig. 3 is a schematic structural diagram of a valve device according to an embodiment of the present invention;
Fig. 4 is an exploded view of a valve device according to an embodiment of the present invention.

The drawings include the following reference signs:
10, connecting portion; 20, support portion; 21, arc-shaped plate; 22, support plate; 30, fixing portion; 31, snap assembly; 311, connecting plate; 3111, hole; 312, hook; 32, limiting member; 321, first limiting surface; 322, second limiting surface; 323, third limiting surface; 33, actuating member; 100, valve seat; 101, limiting slot; 1011, first side surface; 1012, second side surface; 1013, bottom surface; 102, clamping slot; 200, valve body; 201, valve sleeve; 202, valve cover; 2021, limiting surface; 300, coil portion.

### Detailed Description of the Embodiments

Hereinafter, the technical solutions in the embodiments of the present invention will be described clearly and thoroughly with reference to the accompanying drawings of the embodiments of the present invention. Obviously, the embodiments as described are only some of the embodiments of the present invention, and are not all of the embodiments of the present invention. The following description of at least one exemplary embodiment is merely illustrative in nature and is in no way intended to limit some embodiments of the present invention and any applications or uses thereof. All other embodiments obtained by a person of ordinary skill in the art on the basis of the embodiments of the present invention without any inventive effort shall all fall within the scope of protection of some embodiments of the present invention.

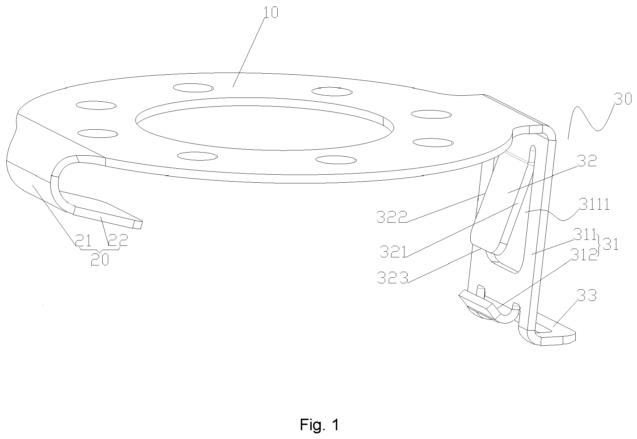

As shown in Fig. 1, the embodiment of the present invention provides a snap-fit. The snap-fit includes a connecting portion 10 and a fixing portion 30, wherein the fixing portion 30 is arranged at the connecting portion 10. The fixing portion 30 includes a snap assembly 31 and a limiting member 32; the limiting member 32 is provided with a connecting end and a free end which are arranged opposite each other; the connecting end of the limiting member 32 is connected to the snap assembly 31; the free end of the limiting member 32 is located outside the snap assembly 31 and directly faces a side of the snap assembly 31 facing the connecting portion 10. In the present invention, the connecting portion 10 is connected to a coil portion 300, the snap assembly 31 is used to be snap-fitted with a valve seat 100 of the valve device, and the limiting member 32 is used to be in limiting fit with the valve seat 100 of the valve device in the circumferential direction.

Since the valve device includes the valve seat 100 and the coil portion 300, the coil portion 300 needs to be fixed on the valve seat 100 when in operation, the coil portion 300 is fixedly connected to the connecting portion 10, and the snap assembly 31 is snap-fitted with the valve seat 100. When the snap-fit is installed, the limiting member 32 is first installed at a corresponding position on the valve seat 100, and then the snap assembly 31 is fixed on the valve seat 100. In this way, the installation difficulty of the snap-fit can be reduced, and it is convenient to install the snap-fit. The fixation of the snap assembly 31 to the valve seat 100 can prevent the coil portion 300 from moving upwards in an axial direction of the valve device and falling off. The limiting member 32 and the valve seat 100 are in limiting fit in a circumferential direction, and can prevent the coil portion 300 from rotating around the axis of the valve seat 100 when in operation. By means of a described structure, when installing the coil portion 300, cumbersome and complex steps of aligning screw holes and tightening screws are avoided, thereby improving an installation efficiency of the coil portion 300 and the valve seat 100, and a stability of the coil portion 300 during use is ensured. Furthermore, in the prior art, when screws are used to fix the coil portion 300, the valve device is prone to screw loosening under vibrational operating conditions, which affects a reliability of the valve device. However, in the present invention, the snap-fit can connect the coil portion 300 to the valve seat 100 stably, and prevent the coil portion 300 from loosening, thereby improving the reliability of the valve device.

An angle is formed between the limiting member 32 and the snap assembly 31, and the limiting member 32 is inclined towards the connecting portion 10. With such an arrangement, it is convenient to process the limiting member 32, and it is convenient to facilitate a limiting fit between the limiting member 32 and the valve seat 100 in a circumferential direction.

Further, the snap assembly 31 includes a connecting plate 311 connected to the connecting portion 10; the connecting plate 311 is provided with a hook 312; the bending part of the hook 312 is located on the side of the connecting plate 311 facing the connecting portion 10, and the hook 312 can be snap-fitted with the valve seat 100. With such an arrangement, it is convenient to connect the hook 312 to the valve seat 100, and a fastening of connection between the snap assembly 31 and the valve seat 100 is ensured.

In some embodiments, the connecting plate 311 is provided with a hole 3111, and a free end of the limiting member 32 is offset from the position of the hole 3111. Such an arrangement facilitates a processing of the limiting member 32, and can reduce a weight of the snap-fit.

The free end of the limiting member 32 is located between the connecting portion 10 and the hook 312. With such an arrangement, when the snap-fit is installed, the limiting member 32 can be installed in place first, and then the hook 312 is fixed on the valve seat 100, so that the fixing portion 30 can restrict the coil portion 300 from moving upwards in the axial direction of the valve device, and restrict the coil portion 300 from rotating circumferentially in the axial direction of the valve device, and furthermore, an integration of the fixing portion can be improved, thereby facilitating operation.

Further, the limiting member 32 is an elastic sheet structure. With such an arrangement, the structure is simple, it is convenient to process and manufacture the limiting member 32, and a limiting effect of the limiting member 32 in the circumferential direction can be ensured. The fixing portion 30 is elastically connected to the connecting portion 10. In the present invention, the connecting plate 311 itself has elasticity. In this way, the fixing portion 30 can be connected to the valve seat 100 by only actuating the fixing portion 30, so that the structure is simple, and it is convenient to connect the fixing portion 30 to the valve seat 100.

Further, the fixing portion 30 further includes an actuating member 33, the actuating member 33 is provided on the connecting plate 311, and the actuating member 33 is located on a side of the connecting plate 311 away from the connecting portion 10. With such an arrangement, when connecting the fixing portion 30 and the valve seat 100, an angle between the fixing portion 30 and the connecting portion 10 is changed by operating the actuating member 33, and after the fixing portion and the connecting portion are aligned, the actuating member 33 is released, which is convenient to operate and simple in structure.

The snap-fit further includes a support portion 20; the support portion 20 and the fixing portion 30 are arranged at intervals in a circumferential direction of the connecting portion 10, and the support portion can support the coil portion 300. The support portion 20 includes a support plate 22 obliquely arranged relative to the connection portion 10. The valve device is provided with a limiting surface 2021, and when the support portion 20 supports the coil portion 300, the support plate 22 abuts against the limiting surface 2021 to prevent a downward movement of the coil portion 300 in the axial direction of the coil portion 300. Furthermore, an angle is formed between the support plate 22 and the connecting portion 10, so that the support plate 22 can be better elastically deformed, and thus the support portion 20 can serve an effective limiting function.

In some embodiments, the support portion 20 further includes an arc-shaped plate 21, the arc-shaped plate 21 is connected to the connecting portion 10, and the support plate 22 is connected to the arc-shaped plate 21. In an embodiment, the arc-shaped plate 21 is elastically connected to the connecting portion 10. With such an arrangement, the arc-shaped plate 21 can achieve an effect of cushioning when the support plate 22 abuts against the limiting surface 2021, thereby preventing the coil portion 300 from being damaged due to excessive impact force when the support portion 20 abuts against the limiting surface 2021.

The snap-fit may include one support portion 20, and may also include a plurality of support portions 20. When the snap-fit includes a plurality of support portions 20, the coil portion 300 can be better supported, and the stability of the coil portion 300 during operation can be ensured.

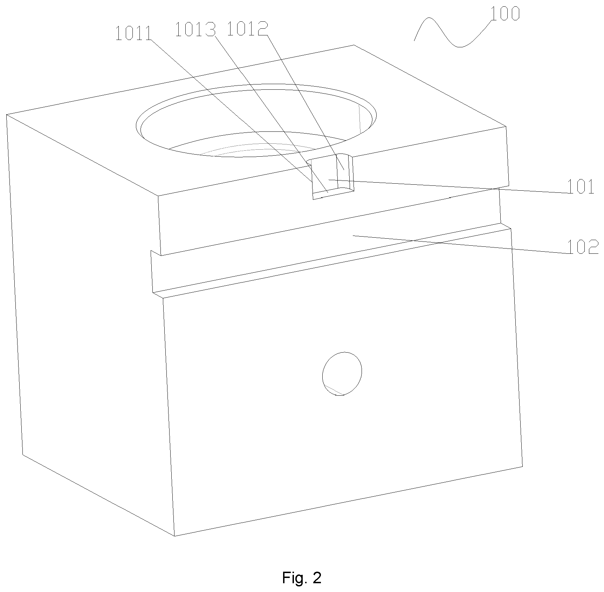

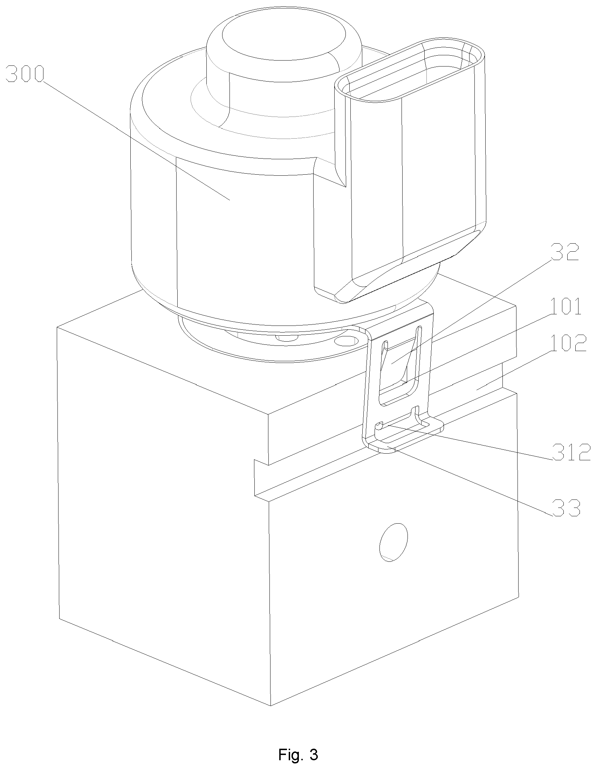

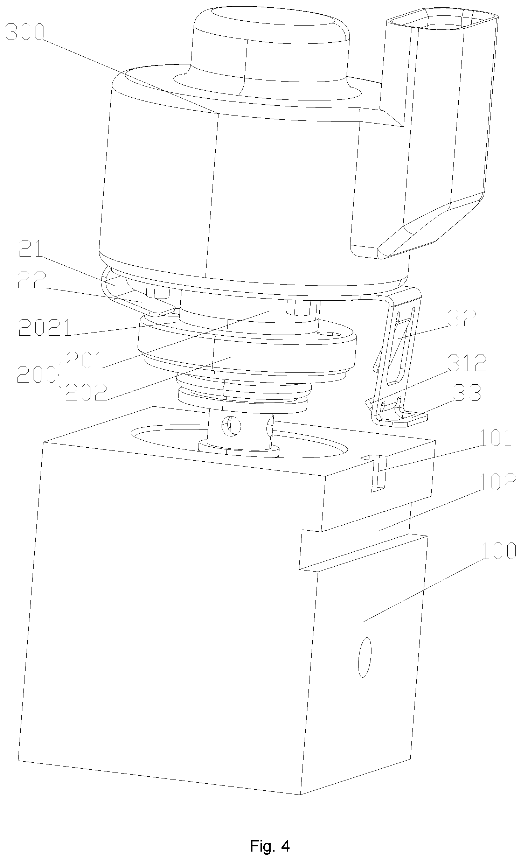

As shown in Figs. 2 to 4, another embodiment of the present invention provides a valve device, the valve device includes a valve main body 200, a coil portion 300 and the snap-fit above; the valve main body 200 includes a valve sleeve 201; and the coil portion 300 is sleeved outside the valve sleeve 201; the connecting portion 10 of the snap-fit is connected to the coil portion 300. With such an arrangement, the snap-fit can be connected to the coil portion 300, facilitating subsequent assembly.

In some embodiments, the valve device further includes a valve seat 100, wherein an outer surface of the valve seat is provided with a protruding portion and a recessed portion, the snap assembly 31 is snap-fitted with the protruding portion, and a free end of the limiting member 32 is inserted into the recessed portion. With such an arrangement, a structure is simple, and a stability when the limiting member 32 and the snap assembly 31 are respectively connected to the limiting slot 101 and the clamping slot 102 can be ensured. Furthermore, by means of the valve device having the snap-fit, it is convenient to fix the coil portion 300 on the valve seat 100.

The snap assembly 31 includes a hook 312; an outer surface of the valve seat 100 is provided with a clamping slot 102 and a limiting slot 101; a portion of the valve seat between the clamping slot 102 and an end face of the valve seat 100 forms the protruding portion; and the hook 312 is snap-fitted with the protruding portion. In some embodiments of the present invention, an end face of the valve seat 100 refers to an end face of the valve seat opposite the connecting portion 10. The limiting slot 101 is provided on the protruding portion; the recessed portion is the limiting slot 101; an end of the limiting slot 101 away from the clamping slot 102 penetrates through an end face of the valve seat 100; and a part between an end of the limiting slot 101 close to the clamping slot 102 and the clamping slot 102 is the protruding portion; and the hook 312 and the limiting member 32 are arranged at intervals in the axial direction of the valve device. With such an arrangement, when connecting the fixing portion 30 and the valve seat 100, it only needs to be assembled once, thereby further reducing the fixing step of the coil portion 300, and facilitating the fixing of the coil portion 300. Furthermore, in this way, the snap-fit can be provided separately when limiting the axial movement and the circumferential movement of the limiting coil portion 300, so as to prevent the cases where, if the engagement between the limiting member 32 and the limiting slot 101 fails or the engagement between the snap assembly 31 and the clamping slot 102 fails, the other party also cannot be engaged, thereby facilitating a maintenance of the valve device.

The free end of the limiting member 32 is located in the limiting slot 101; a side wall of the limiting member 32 is in limiting fit with an inner wall of the limiting slot 101; and the present structure is that the limiting member 32 includes a first limiting surface 321 and a second limiting face 322 arranged opposite to each other, and a third limiting surface 323 located between the first limiting surface 321 and the second limiting surface 322; the limiting slot 101 includes a first side surface 1011 and a second side surface 1012 arranged opposite to each other, and a bottom surface 1013 located between the first side surface 1011 and the second side surface 1012; the first limiting surface 321 is adhered to the first side surface 1011; the second limiting surface 322 is adhered to the second side surface 1012; the third limiting surface 323 is adhered to the bottom surface 1013 or a gap is provided between the third limiting surface 323 and the bottom surface 1013. It should be noted herein that, in cases where the third limiting surface 323 is not adhered to the bottom surface 1013, the support portion 20 and the snap assembly 31 cooperate to ensure the stability of the coil portion 300 in the axial direction of the valve device. With such an arrangement, the structure is simple, it is convenient to process the valve seat 100, and a stability when the limiting member 32 and the snap assembly 31 are respectively connected to the limiting slot 101 and the clamping slot 102 can be ensured.

Further, the snap-fit further includes a support plate 22 connected to the connecting portion 10 and obliquely arranged relative to the connecting portion 10; the valve body 200 further includes a valve cover 202 connected to the valve sleeve 201; an end face of the valve seat 100 is provided with an opening; at least part of the valve cover 202 is located in the opening and is connected to the valve seat 100; the valve cover 202 is provided with a limiting surface 2021, and the support plate 22 in the snap-fit is obliquely arranged relative to the limiting surface 2021 and abuts against the limiting surface 2021. In the prior art, the valve seat 100 generally has a relatively large processing error and a relatively large installation error, and the processing precision of the valve cover 202 is higher than that of the valve seat 100. With such an arrangement, when the support portion 20 abuts against the valve cover 202, it is convenient to design a size of the support portion 20, and the support effect of the support portion 20 and the coil portion 300 can be ensured.

The use principle of the valve device having a snap-fit is as follows: the connecting portion 10 of the snap-fit is fixedly connected to the coil portion 300; the hook 312 of the fixing portion 30 is snap-fitted with the protruding portion of the valve seat 100 to prevent the coil portion 300 from moving upward along the axis during operation; an end of the limiting member 32 is inserted into the recessed portion of the valve seat 100 to prevent the coil portion 300 from rotating circumferentially during running; the support portion 20 of the snap-fit abuts against the stop surface 2021 of the valve cover 202 to prevent the coil portion 300 from moving downwards along the axis during operation.

It should be noted that the terms used herein are for the purpose of describing particular embodiments only and are not intended to limit exemplary embodiments in accordance with the present invention. As used herein, the singular form is intended to include the plural form as well, unless the context clearly indicates otherwise, and further it should be understood that the terms "includes" and/or "including" when used in the present description, specify the presence of features, steps, operations, devices, components and/or combinations thereof.

Unless specifically stated otherwise, the relative arrangement of components and steps, numerical expressions and numerical values set forth in these embodiments do not limit the scope of the present invention. Moreover, it should be understood that for the convenience of description, the dimensions of the parts shown in the drawings are not drawn according to the actual proportional relationship. Techniques, methods and devices known to a person of ordinary skill in the relevant art may not be discussed in detail, but the techniques, methods and devices shall be considered as a part of the description to be granted, where appropriate. In all examples shown and discussed herein, any specific values shall be construed as exemplary only and not as limiting. Therefore, other examples of the exemplary embodiments may have different values. It should be noted that similar numerals and letters represent similar items in the following figures, and thus once an item is defined in a figure, it need not be further discussed in subsequent figures.

In the description of the present invention, it should be understood that, orientations or position relationships indicated by directional terms such as "front, back, upper, lower, left, right", "lateral, vertical, perpendicular, horizontal", "top, bottom" and the like are orientations or position relationships based on accompanying drawings and are only for the convenience of illustration of the specification and simplicity of illustration, unless specified to the contrary, the directional terms do not explicitly or implicitly indicate that apparatuses or components referred to herein must have a certain direction or be configured or operated in a certain direction, and therefore cannot be understood as limitations to the present invention. The directional terms "internal, external" refer to internal and external relative to the outline of each component itself.

In order to facilitate description, a spatial relative term may be used here, such as "over", "above", "on an upper surface" and "on", to describe a spatial location relation between a device or a feature shown in the drawing and other devices or other features. It is to be understood that the spatial relative term aims at including different orientations of the device during use or operation outside the orientation described in the drawing. For example, if the device in the drawing is inverted, it may be described as that the device "above other devices or other structures" or "over other devices or other structures" shall be positioned "under other devices or other structures" or "below other devices or other structures". Therefore, an exemplary term "above" may include two orientations: "above" and "under". As an alternative, the device may be positioned with other different modes (90° rotation or positioned at other orientations), and the spatial relative description used here needs to be explained correspondingly.

In addition, it should be noted that, using words such as "first" and "second" to define components is merely for the purpose of distinguishing the components. Unless otherwise stated, the foregoing words do not have special meanings and cannot be construed as any limitations on the protection scope of the present invention.

The content above merely relates to preferred embodiments of the present invention and is not intended to limit the present invention. For a person skilled in the art, the present invention may have various modifications and variations. Any modifications, equivalent replacements, improvements, etc. made within the spirit and principle of the present invention shall all belong to the scope of protection of the present invention.

## Claims

1. A snap-fit, comprising:
a connecting portion (10);
a fixing portion (30) arranged at the connecting portion (10);
wherein the fixing portion (30) comprises a snap assembly (31) and a limiting member (32); the limiting member (32) is provided with a connecting end and a free end, which are arranged opposite each other; the connecting end of the limiting member (32) is connected to the snap assembly (31); the free end of the limiting member (32) is located outside the snap assembly (31) and directly faces a side of the snap assembly (31) facing the connecting portion (10).

2. The snap-fit according to claim 1, wherein the snap assembly (31) comprises a connecting plate (311) connected to the connecting portion (10); the connecting plate (311) is provided with a hook (312); a bending part of the hook (312) is located on a side of the connecting plate (311) facing the connecting portion (10).

3. The snap-fit according to claim 2, wherein the connecting plate (311) is provided with a hole (3111), and the free end of the limiting member (32) is offset from a position of the hole (3111).

4. The snap-fit according to claim 2, wherein the free end of the limiting member (32) is located between the connecting portion (10) and the hook (312).

5. The snap-fit according to claim 2, wherein the fixing portion (30) further comprises an actuating member (33), the actuating member (33) is provided on the connecting plate (311), and the actuating member (33) is located on a side of the connecting plate (311) away from the connecting portion (10).

6. The snap-fit according to claim 1, wherein the snap-fit further comprises a support portion (20); the support portion (20) and the fixing portion (30) are arranged at intervals in a circumferential direction of the connecting portion (10);
wherein the support portion (20) comprises a support plate (22), and the support plate (22) is obliquely arranged relative to the connection portion (10).

7. The snap-fit according to claim 6, wherein the support portion (20) further comprises an arc-shaped plate (21), the arc-shaped plate (21) is connected to the connecting portion (10), and the support plate (22) is connected to the arc-shaped plate (21).

8. A valve device, wherein the valve device comprises a valve main body (200), a coil portion (300) and the snap-fit of any one of claims 1-7, the valve main body (200) comprises a valve sleeve (201), and the coil portion (300) is sleeved outside the valve sleeve (201); and the connecting portion (10) of the snap-fit is connected to the coil portion (300).

9. The valve device according to claim 8, further comprising a valve seat (100), wherein an outer surface of the valve seat is provided with a protruding portion and a recessed portion, the snap assembly (31) is snap-fitted with the protruding portion, and a free end of the limiting member (32) is inserted into the recessed portion.

10. The valve device according to claim 9, wherein
the snap assembly (31) comprises a hook (312);
an outer surface of the valve seat (100) is provided with a clamping slot (102) and a limiting slot (101); a portion of the valve seat between the clamping slot (102) and an end face of the valve seat (100) forms the protruding portion; and the hook (312) is snap-fitted with the protruding portion; the limiting slot (101) is provided on the protruding portion; the recessed portion is the limiting slot (101); an end of the limiting slot (101) away from the clamping slot (102) penetrates through an end face of the valve seat (100); and a part between an end of the limiting slot (101) close to the clamping slot (102) and the clamping slot (102) is the protruding portion; the free end of the limiting member (32) is located in the limiting slot (101).

11. The valve device according to claim 10, wherein the limiting member (32) comprises a first limiting surface (321) and a second limiting face (322) arranged opposite to each other, and a third limiting surface (323) located between the first limiting surface (321) and the second limiting surface (322); the limiting slot (101) comprises a first side surface (1011) and a second side surface (1012) arranged opposite to each other, and a bottom surface (1013) located between the first side surface (1011) and the second side surface (1012); the first limiting surface (321) is adhered to the first side surface (1011); the second limiting surface (322) is adhered to the second side surface (1012); and a gap is provided between the third limiting surface (323) and the bottom surface (1013).

12. The valve device according to claim 9, wherein the snap-fit further comprises a support plate (22) connected to the connecting portion (10) and obliquely arranged relative to the connecting portion (10); the valve body (200) further comprises a valve cover (202) connected to the valve sleeve (201); an end face of the valve seat (100) is provided with an opening; at least part of the valve cover (202) is located in the opening and is connected to the valve seat (100); the valve cover (202) is provided with a limiting surface (2021), and the support plate (22) in the snap-fit is obliquely arranged relative to the limiting surface (2021) and abuts against the limiting surface (2021).
